(19) Europäisches Patentamt
European Patent Office
Office européen des brevets

(11) Veröffentlichungsnummer: **0 222 250**
**A1**

(12) **EUROPÄISCHE PATENTANMELDUNG**

(21) Anmeldenummer: 86114924.3

(22) Anmeldetag: 27.10.86

(51) Int. Cl.[4]: C08L 71/04, C08L 77/00, C08G 65/48

(30) Priorität: 13.11.85 DE 3540120

(43) Veröffentlichungstag der Anmeldung: 20.05.87 Patentblatt 87/21

(84) Benannte Vertragsstaaten: BE DE FR GB NL

(71) Anmelder: **BASF Aktiengesellschaft**
Carl-Bosch-Strasse 38
D-6700 Ludwigshafen(DE)

(72) Erfinder: **Taubitz, Christof, Dr.**
In der Dreispitz 15
D-6706 Wachenheim(DE)
Erfinder: **Seiler, Erhard, Dr.**
Erpolzheimer Strasse 1
D-6700 Ludwigshafen(DE)
Erfinder: **Boehlke, Klaus, Dr.**
Gerhardt-Hauptmann-Strasse 53
D-6717 Hessheim(DE)

(54) **Thermoplastische Formmassen.**

(57) Thermoplastische Formmassen, enthaltend als wesentliche Komponente ein Gemisch aus

A) 5 - 97,5 Gew.% eines Polyamids und

B) 2,5 -95 Gew.% eines Polyphenylenethers, der 0,01 bis 35 mol% an Phenylenetherbausteinen enthält, die am aromatischen Kern oder an einer am Kern substituierten Methylgruppe eine COOH-Gruppe tragen, und deren Verwendung.

EP 0 222 250 A1

Xerox Copy Centre

# Thermoplastische Formmassen

Die vorliegende Erfindung betrifft thermoplastische Formmassen, die als wesentliche Komponente ein Gemisch aus

A) 5 -97,5 Gew.% eines Polyamids und

B) 2,5 -95 Gew.% eines Polyphenylenethers, der 0,01 bis 35 mol% an Phenylenetherbausteinen enthält, die am aromatischen Kern oder an einer am Kern substituierten Methylgruppe eine COOH-Gruppe tragen, enthalten, sowie die Verwendung dieser Formmassen zur Herstellung von Formkörpern.

Polyphenylenether und deren Gemische mit Styrolpolymerisaten haben jedoch den Nachteil, daß sie nur eine geringe Lösungsmittelbeständigkeit aufweisen. Ihre Verwendungsbreite ist deshalb begrenzt. Aus der US-PS-3 379 792 ist bekannt, daß die Schmelzflußeigenschaften von Polyphenylenether durch den Zusatz einer geringen Menge an Polyamiden verbessert wird. Es wird jedoch in dieser Druckschrift festgelegt, daß bei einem Polyamidzusatz in einer Menge von über 20 Gew.% andere Eigenschaften der Polyphenylenether in beträchtlichem Ausmaß verschlechtert werden. aus der GB-A-2 054 623 sind auch schon Formmassen aus Polyphenylenethern und größeren Anteilen an Polyamiden bekannt. Hierbei ist es jedoch erforderlich, einen längeren Mischvorgang bei Schmelztemperatur vorzunehmen. Beim Mischen bei Schmelztemperatur über längere Zeit treten jedoch leicht Abbauerscheinungen ein. In der japanischen Patentanmeldung 59 066 452 werden Abmischungen aus mit Maleinsäureanhydrid umgesetzten Polyphenylenether und Polyamiden beschrieben. Nachteilig ist der geringe Schmelzfluß der Polymerblends.

Es war deshalb die technische Aufgabe gestellt, thermoplastische Formmassen zur Verfügung zu stellen, die neben einer guten Verarbeitbarkeit durch u.a. eine hohe Schmelzfließfähigkeit zusätzlich gute thermische, mechanische und elektrische Eigenschaften aufweisen und sich insbesondere durch eine hohe Schlagzähigkeit und gute Lösungsmittelbeständigkeit auszeichnen und reproduzierbarer herstellbar sind.

Dementsprechend wurden thermoplastische Formmassen, die als wesentliche Komponente ein Gemisch aus

A) 5 -97,5 Gew.% eines Polyamids und

B) 2,5 -95 Gew.% eines Polyphenylenethers, der 0,01 bis 35 mol% an Phenylenetherbausteinen enthält, die am aromatischen Kern oder an einer am Kern substituierten Methylgruppe eine COOH-Gruppe tragen, enthalten, sowie die Verwendung dieser Formmassen zur Herstellung von Formkörpern gefunden.

Außerdem wurde gefunden, daß Formmassen der oben genannten Art besonders gut geeignet sind, wenn die Polyphenylenetherkomponente 0,5 bis 10 mol% an COOH-Gruppen tragenden Phenylenetherbausteinen enthält. Weiterhin wurde gefunden, daß besonders gute Erfolge mit Formmassen der oben genannten Art erzielbar sind, wenn sie zusätzlich zu den Komponenten (A) und (B) einen carboxylfreien Polyphenylenether (C), ein vinylaromatisches Polymeres (D) und/oder bis zu 40 Gew.% eines schlagzäh modifizierenden Kautschuks (E) enthalten.

Die Polymermischungen zeichnen sich durch sehr gute mechanische Werte, Lösungsmittelbeständigkeit und Verarbeitbarkeit bei guter Reproduzierbarkeit aus.

Als Komponente A enthalten die erfindungsgemäßen Formmassen 5 bis 97,5 Gew.-Teile mindestens eines thermoplastischen Polyamids. Geeignet sind lineare Polyamide z.B. mit einer relativen Viskosität von 2,2 bis 4,5, gemessen als 1-gewichtsprozentige Lösung in 96-gewichtsprozentiger Schwefelsäure bei 23°C. Bevorzugt sind Polyamide, die sich von Lactamen mit 7 bis 13 Ringgliedern ableiten, wie Polycaprolactam, Polycaprylactam oder Polylaurinlactam, sowie Polyamide, die durch Umsetzung von Dicarbonsäuren mit Diaminen erhalten werden. Geeignete Dicarbonsäuren, die auch in beliebigen Kombinationen einsetzbar sind, sind Alkandicarbonsäuren mit 6 bis 12, insbesondere 6 bis 10 Kohlenstoffatomen, wie Terephthalsäure und Isophthalsäure. Geeignete Diamine, die auch in beliebigen Kombinationen einsetzbar sind, sind Alkandiamine mit 6 bis 12, insbesondere 6 bis 8 Kohlenstoffatomen, ferner m-Xylylendiamin, Bis-(4-aminophenyl)propan-2,2, Bis(4-aminocyclohexyl)methan oder Bis(4-aminophenyl)propan-2,2. Es ist auch möglich, Mischungen der genannten Polyamide zu verwenden. Besondere Bedeutung haben Polyamid-6, Polyamid-66 sowie Polyamide die aus Hexamethylendiamin und Isophthalsäure sowie Terephthalsäure aufgebaut sind, erlangt. Formmassen, enthaltend 10 bis 80 Gew.-%, insbesondere 40 bis 70 Gew.-% eines thermoplastischen Polyamids, sind bevorzugt.

Als Komponente (B) kann ein Polyphenylenether eingesetzt werden, in den die Carboxylgruppen durch polymeranaloge Umsetzungen eingeführt wurden.

Bei den Polyphenylenethern handelt es sich um Verbindungen auf Basis von in 2-und/oder 6-Stellung zum Sauerstoffatom substituierten, insbesondere disubstituierten, Polyphenylenoxiden, wobei der Ethersauerstoff der einen Einheit an den Benzolkern der benachbarten Einheit gebunden ist. Vorteilhaft sind mindestens 20 Einheiten miteinander verknüpft. Geeignete Polyphenylenether haben als Substituenten in 2,6-Stellung zum Sauerstoffatom Alkylreste mit bevorzugt bis 4 Kohlenstoffatomen, die kein alpha-ständiges tertiäres Wasserstoffatom aufweisen, z.B. Methyl-, Ethyl-, Propyl-oder Butylrest.

Beispielhaft seien genannt: Poly(2,5-dilauryl-1,4-phenylen)ether, Poly(2-ethyl-6-stearyloxy-1,4-phenylen)ether, Poly(2-methyl-1,6-phenyl-1,4-phenylen)ether, Poly(2,6-dibenzyl-1,4-phenylen)ether. Ebenfalls geeignet sind Copolymere von verschiedenen Phenolen, wie 2,6-Dimethylphenol und 2,3,6-Trimethylphenol.

Besonders bevorzugt für die erfindungsgemäßen Abmischungen sind solche, bei denen die Substituenten Alkyle mit 1 bis 4 C-Atomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-phenylen)ether. Vorzugsweise haben die verwendeten Polyphenylenether eine Grenzviskosität von 0,3 bis 0,7 dl/g - (gemessen in Chloroform bei 30°C).

Die Carboxylgruppen können in den Polyphenylenether durch polymeranaloge Umsetzungen wie die Oxidation eines Teiles der seitenständigen $CH_3$-Gruppen im Polyphenylenether eingeführt werden. Bevorzugt werden Verbindungen, die durch Umsetzung eines Polyphenylenethers mit einem Metallalkyl und anschließend mit Kohlendioxid und einer Mineralsäure erhalten werden. Solche Verbindungen sind an sich bekannt aus S. Xie, J. Appl. Polym. <u>29</u> (1984) 2679-2682 und A. J. Chalk, J. Pol. Sci. A1 <u>7</u> (1968) 691-705.

Die Umsetzungen des Polyphenylenethers mit Metallalkyl, Kohlendioxid und Mineralsäure können in üblichen Lösungsmitteln, wie Benzol, Toluol, Xylole, Tetrahydrofuran oder deren Gemischen durchgeführt werden und laufen gut ab bei Temperaturen zwischen -80°C und +50°C und Normaldruck.

Nach der Umsetzung mit Metallalkylen werden die Mischungen mit CO" umgesetzt, so daß ein Polyphenylenether mit Carboxylgruppen entsteht. Es sind daher nur Metallalkyle bevorzugt einsetzbar, mit denen sich eine aus reichende Menge Carboxylgruppen schnell bilden lassen. Bevorzugt sind Lithiumalkyle, im besonderen Butyl-Lithium, wie n-Butyl-Lithium oder sec.-Butyl-Lithium.

Die Metallalkyle werden im allgemeinen aus 0,1 bis 10 mol%iger Lösung in aliphatischen Kohlenwasserstoffen bevorzugt bei Raumtemperatur eingesetzt. Man kann entweder das gesamte benötigte Metallalkyl langsam zudosieren oder das Reagens in zwei Portionen zugeben. Die erste, im allgemeinen kleinere Menge, wird langsam zudosiert, bis alle Verunreinigungen, z.B. restliches $H_2O$ oder OH-Gruppen, mit dem Metallalkyl reagiert haben. Dieser Zeitpunkt ist leicht an der Verfärbung eines in geringen Mengen zugegebenen Indikators, z.B. Styrol, zu erkennen. Der verbleibende Rest kann dann zügig zur Reaktionsmischung zugegeben werden. Die Mengen an verwendetem Polyphenylenether und Metallalkyl und die Reaktionszeiten richten sich nach dem gewünschten Carboxylierungsgrad.

Das Kohlendioxid, mit dem anschließend umgesetzt wird, wird im allgemeinen im Überschuß und in kondensierter Form, gegebenenfalls unter Zusatz von Diethylether, verwendet.

Danach wird üblicherweise mit einem Überschuß an Mineralsäuren, wie Salzsäure oder Schwefelsäure, im allgemeinen unter Zusatz von Wasser, vorzugsweise bei Raumtemperatur behandelt, und das Polymere wie üblich, z.B. durch Ausfällen mit Methanol und Trocknen, aufgearbeitet. In einer Verfahrensvariante kann das Polymere auch vor der Säurebehandlung abfiltriert werden, wenn beispielsweise bei der Reaktion mit Kohlendioxid das Polymere durch Zusatz von Fällungsmitteln ausgefällt wurde.

Die Konzentrationen bei den Umsetzungen werden bevorzugt so gewählt, daß der carboxylierte Polyphenylenether 0,01 bis 35 mol%, insbesondere 0,5 bis 10 mol%, an Carboxylgruppen aufweist.

Die Komponente (B) ist in der Formmasse zu 2,5 bis 95 Gew.% enthalten.

Die Formmasse kann gegebenenfalls als Komponente (C) weitere, sich von (B) unterscheidende Polyphenylenether enthalten. Diese sind bevorzugt die für die Herstellung von (B) eingesetzten Polyphenylenether. Sie sind im allgemeinen in Mengen unter 93, bevorzugt unter 86 Gew.%, bezogen auf die Formmasse, vorhanden.

Als weitere Komponente (D) kann gegebenenfalls ein vinylaromatisches Polymeres eingesetzt werden. Es besteht überwiegend aus vinylaromatischen Monomeren, bevorzugt ist die Komponente - (D) mit (C) und (B) verträglich. Besonders geeignet sind Polymere, die Styrol, $\alpha$-Methylstyrol, p-Methyl styrol oder deren Gemische, in untergeordneten Mengen auch (Meth)acrylester, (Meth)acrylnitril, - (Meth)acrylamid, (Meth)acrylsäure oder Maleinsäureanhydrid oder Gemische einpolymerisiert enthalten. Die Komponente (D) kann gegebenenfalls schlagzäh modifiziert sein, wie im hochschlagfesten Polystyrol (HIPS), wobei das vinylaromatische Monomere in Gegenwart eines Synthesekautschuks polymerisiert wird.

(D) ist üblicherweise in Mengen unter 93, insbesondere unter 86 Gew.%, bezogen auf die Formmasse, vorhanden.

Zur Schlagzähmodifizierung können die erfindungsgemäßen Formmassen als Komponente (E) Synthesekautschuk enthalten, wie Polybutadien-Kautschuk, Acrylat-Kautschuk, Styrol-Butadien-Kautschuk, Polybuten-Kautschuk, hydrierten Styrol-Butadien-Kautschuk, Acrylnitril-Butadien-Kautschuk, Ethylen-Propylen-Kautschuk, Polyisopren-Kautschuk, styrolgepfropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert (taper)-, Stern-Blöcke und ähnliche, analoge Isopren-Blockpolymerisate, auch (teil)-hydrierte Blockcopolymere. Die Komponente (E) kann in Mengen bis 40 Gew.% in der erfindungsgemäßen Formmasse vorhanden sein.

Darüber hinaus können die erfindungsgemäßen thermoplastischen Formmassen übliche Zuschlagstoffe in wirksamen Mengen enthalten bis zu 40 Gew.%, vorzugsweise bis zu 20 Gew.%. Als Zuschlagstoffe seien genannt Hitze-und Lichtstabilisatoren, Gleit-und Entformungsmittel, Färbemittel, wie Farbstoffe und Pigmente in üblichen Mengen. Geeignete Zusatzstoffe sind auch Verstärkungsmittel wie Glasfasern, Asbestfasern, Kohlenstoff-Fasern, aromatische Polyamidfasern und/oder Füllstoffe, Gipsfaser, synthetische Calciumsilikate, Kaolin, calciniertes Kaolin, Wollastonit, Talkum, Kreide, ferner Flammschutzmittel, wie Phosphorverbindungen, z.B. Phosphate, Phosphorsäureester, Phosphorigsäureester, Phosphinsäureester, Phosphonigsäureester oder organisches Phosphinoxid.

Die erfindungsgemäßen thermoplastischen Formmassen erhält man zweckmäßig durch Mischen der Einzelkomponenten bei Temperaturen von 230 bis 320°C in üblichen Mischvorrichtungen, wie Extrudern oder Knetern. Bevorzugt benutzt man Zweischneckenextruder. Gegebenenfalls kann man die Komponenten (B), (C) und (D) vormischen.

Die erfindungsgemäßen thermoplastischen Formmassen eignen sich zur Herstellung von Formkörpern durch Spritzgießen oder Extrusion.

Beispiel 1

150 g Poly(2,6-dimethyl-1,4-phenylen)ether mit einer relativen Viskosität von 0,56, gemessen in 1 gewichtsprozentiger $CHCl_3$-Lösung bei 25°C, wurden in 3000 g Toluol gelöst. Man destillierte 500 g Toluol ab, kühlte und versetzte mit 1 g Styrol. Danach tropfte man sec.-Butyl-Lithium (in Cyclohexan) zügig zu, bis die Lösung sich rot färbte, anschließend fügte man 90 mmol sec.-Butyl-Lithium zu und rührte 5 Minuten. Man versetzte mit einem Überschuß Trockeneis und säuerte zusätzlich mit konz. HCl an. Das Polymere wurde in Methanol gefällt, gewaschen und getrocknet. Durch Titration der Säuregruppe ergab sich, daß in 1,5 mol.% der wiederkehrenden Einheiten Carboxylgruppen eingebaut waren. Dieser carboxylgruppenhaltige Polyphenylenether wird im folgenden mit (B1) bezeichnet.

In einem Zweischneckenextruder wurde bei 275°C eine Formmasse aus 65 Gew.% Polyamid 6 mit einer relativen Viskosität von 3,2, gemessen in 1 gewichtsprozentiger Lösung in konzentrierter Schwefelsäure bei 23°C, im folgenden mit (A1) bezeichnet, und 35 Gew.% (B1) hergestellt, granuliert und im Spritzgußverfahren zu Formkörpern verarbeitet. Die Schlagzähigkeit und Kerbschlagzähigkeit wurde nach DIN 53 453 gemessen, die Ergebnisse sind in der nachfolgenden Tabelle zusammengefaßt.

Beispiel 2

Eine Formmasse aus 60 Gew.% (A1), 35 Gew.% (B1) und 5 Gew.% eines Poly(2,6-dimethyl-1,4-phenylen)ethers mit einer relativen Viskosität von 0,56, gemessen in 1 gewichtsprozentiger Chloroformlösung bei 25°C, im folgenden mit (C1) bezeichnet, wurde wie in Beispiel 1 hergestellt, verarbeitet und analysiert.

Vergleichsbeispiel 1, 2 V

Eine Formmasse aus 65 Gew.% (A1) und 35 Gew.% (C1) wurde wie in Beispiel 1 hergestellt, verarbeitet und analysiert.

Beispiel 3

Eine Formmasse aus 55 Gew.% (A1), 35 Gew.% (B1) und 10 Gew.% eines anionisch hergestellten symmetrischen Dreiblockpolymeren, das 70 Gew.% Butadien und in jedem Block 15 Gew.% Styrol enthielt und ein Gewichtsmittel des Molekulargewichtes von 80 000 g/mol aufwies (Cariflex ®TR 1102 (® eingetr. Warenzeichen der Fa. Shell)-), im folgenden als (E1) bezeichnet, wurde wie in Beispiel 1 hergestellt, verarbeitet und analysiert.

Beispiel 4

Eine Formmasse aus 50 Gew.% Polyamid 6,6 mit einer relativen Viskosität von 4,2, gemessen in 1 gewichtsprozentiger Lösung in konzentrierter Schwefelsäure bei 23°C, im folgenden mit (A2) bezeichnet, 35 Gew.% (B1) und 5 Gew.% eines Standardpolystyrols (Polystyrol PS 144 C, Fa. BASF Aktiengesellschaft) mit einem Schmelzindex von 24 g/10 min, gemessen nach DIN 53 375 - (200/5,0), im folgenden mit (D1) bezeichnet, und 10 Gew.% (E1) wurde wie in Beispiel 1 hergestellt, verarbeitet und analysiert.

Vergleichsbeispiel 3, 4 V

Eine Formmasse aus 55 Gew.% (A1), 35 Gew.% (C1) und 10 Gew.% (E1) wurde wie in Beispiel 1 hergestellt, verarbeitet und analysiert.

Beispiel 5

100 g Poly(2,6-dimethyl-1,4-phenylen)ether wurden in 2000 g Tetrahydrofuran gelöst. Man fügte 0,38 mol sec.-Butyl-Lithium (gelöst in Hexan) bei Raumtemperatur tropfenweise zu und rührte 10 Minuten nach. Man versetzte mit einem Überschuß Trockeneis, fügte konz. HCl zu und filtrierte. Anschließend wurde mit Hexan gefällt. Durch Titration der Säuregruppe ergab sich, daß in 8 mol.% der wiederkehrenden Einheit Carboxylgruppen eingebaut waren. Dieser carboxylgruppenhaltige Polyphenylenether wird im folgenden mit (B2) bezeichnet.

Eine Formmasse aus 60 Gew.% (A2) und 40 Gew.% (B2) wurde wie in Beispiel 1 hergestellt, verarbeitet und analysiert.

Vergleichsbeispiel 5 V

Eine Formmasse aus 60 Gew.% (A2) und 40 Gew.% (C1) wurde wie in Beispiel 1 hergestellt, verarbeitet und analysiert.

Beispiel 6

Eine Formmasse aus 55 Gew.% (A2), 35 Gew.% (B2) und 10 Gew.% (E1) wurde wie in Beispiel 1 hergestellt, verarbeitet und analysiert.

Vergleichsbeispiel 6 V

Eine Formmasse aus 55 Gew.% (A2), 35 Gew.% (C1) und 10 Gew.% (E1) wurde wie in Beispiel 1 hergestellt, verarbeitet und analysiert.

Beispiel 7

Eine Formmasse aus 21 Gew.% (A2), 21 Gew.% (B2), 53 Gew.% eines anionisch in Gegenwart von 8 Gew.% hergestellten Polystyrols - (HIPS, Buna® CB NX 529 C (® = eingetr. Warenzeichen der Fa. Bayer)) mit einem Schmelzindex von 15 g/10 min, gemessen nach DIN 53 735 - (200/5,0), im folgenden mit (D2) bezeichnet, und 5 Gew.% (E1) wurde wie in Beispiel 1 hergestellt, verarbeitet und analysiert.

Vergleichsbeispiel 7 V

Eine Formmasse aus 21 Gew.% (A2), 21 Gew.% (C1), 53 Gew.% (D2) und 5 Gew.% (E1) wurde wie in Beispiel 1 hergestellt, verarbeitet und analysiert.

Beispiel 8

Eine Formmasse aus 55 Gew.% (A2), 10 Gew.% (B2), 23 Gew.% (D2) und 12 Gew.% (E1) wurde wie in Beispiel 1 hergestellt, verarbeitet und analysiert.

Beispiel 9

Eine Formmasse aus 47 Gew.% (A2), 20 Gew.% (B2), 20 Gew.% (C1), 5 Gew.% (B2) und 8 Gew.% (E1) wurde wie in Beispiel 1 hergestellt, verarbeitet und analysiert.

Tabelle

| Beispiel | Gew.-% | | | | | DIN 53 453 | |
|---|---|---|---|---|---|---|---|
| | A | B | C | D | E | Schlagzähigkeit kJ/m² | Kerbschlagzähigkeit kJ/m² |
| 1 | 65 A1 | 35 B1 | - | - | - | 20,2 | 4,1 |
| 2 | 60 A1 | 35 B1 | 5 C1 | - | - | 21,2 | 4,0 |
| 1, 2 V | 65 A1 | - | 35 C1 | - | - | 9,2 | 0,9 |
| 3 | 55 A1 | 35 B1 | - | - | 10 E1 | kein Bruch | 11,2 |
| 4 | 50 A2 | 35 B1 | - | 5 D1 | 10 E1 | kein Bruch | 9,4 |
| 3, 4 V | 55 A1 | - | 35 C1 | - | 10 E1 | 15,4 | 1,4 |
| 5 | 60 A2 | 40 B2 | - | - | - | 24,1 | 3,7 |
| 5 V | 60 A2 | - | 40 C1 | - | - | 10,1 | 0,8 |
| 6 | 55 A2 | 35 B2 | - | - | 10 E1 | kein Bruch | 12,0 |
| 6 V | 55 A2 | - | 35 C1 | - | 10 E1 | 12,1 | 0,6 |
| 7 | 21 A2 | 21 B2 | - | 53 D2 | 5 E1 | 45,4 | 3,9 |
| 7 V | 21 A2 | - | 21 C1 | 53 D2 | 5 E1 | 6,2 | 0,4 |
| 8 | 55 A2 | 10 B2 | - | 23 D2 | 12 E1 | 86,1 | 6,3 |
| 9 | 47 A2 | 20 B2 | 20 C1 | 5 D2 | 8 E1 | kein Bruch | 7,9 |

## Ansprüche

1. Thermoplastische Formmassen, enthaltend als wesentliche Komponente ein Gemisch aus

A) 5 -97,5 Gew.% eines Polyamids und

B) 2,5 -95 Gew.% eines Polyphenylenethers, der 0,01 bis 35 mol% an Phenylenetherbausteinen enthält, die am aromatischen Kern oder an einer am Kern substituierten Methylgruppe eine COOH-Gruppe tragen.

2. Thermoplastische Formmassen nach Anspruch 1, deren Polyphenylenetherkomponente 0,5 bis 10 mol% der COOH-Gruppen tragenden Phenylenetherbausteine enthält.

3. Thermoplastische Formmassen nach den Ansprüchen 1 und 2, enthaltend einen carboxylgruppenfreien Polyphenylenether (C).

4. Thermoplastische Formmassen nach den Ansprüchen 1 bis 3, enthaltend ein vinylaromatisches Polymeres (D).

5. Thermoplastische Formmassen nach den Ansprüchen 1 bis 4, enthaltend bis zu 40 Gew.%, bezogen auf die Formmasse, eines schlagzäh modifizierenden Kautschuks (E).

6. Verwendung der thermoplastischen Formmassen gemäß den Ansprüchen 1 bis 5 zur Herstellung von Formkörpern durch Spritzguß oder Extrusion.

Europäisches Patentamt

# EUROPÄISCHER RECHERCHENBERICHT

Nummer der Anmeldung

EP 86 11 4924

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | GB-A-2 054 623 (SUMITOMO) * Ansprüche; Seite 1, Zeilen 43-49; Seite 2, Zeilen 1-13 * | 1-6 | C 08 L 71/04<br>C 08 L 77/00<br>C 08 G 65/48 |
| X | DE-A-1 913 268 (BASF) * Ansprüche; Seite 7, Absatz 5 * | 1-6 | |

RECHERCHIERTE SACHGEBIETE (Int. Cl.4)

C 08 L

Der vorliegende Recherchenbericht wurde für alle Patentansprüche erstellt.

| Recherchenort | Abschlußdatum der Recherche | Prüfer |
|---|---|---|
| DEN HAAG | 02-02-1987 | DERAEDT G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82